# EUROPEAN PATENT SPECIFICATION

(11) **EP 0 584 990 B1**
(45) Date of publication and mention of the grant of the patent: **10.04.1996**
(21) Application number: 93306275.4
(22) Date of filing: 09.08.1993
(51) Int. Cl.: B23H 7/02, B23H 11/00

(54) **Wire-cut electroerosion apparatus**
Drahtschneide-Elektroentladungsmaschine
Machine d'usinage à décharge électrique et découpage par fil

(30) Priority: 13.08.1992 JP 216094/92
(43) Date of publication of application: 02.03.1994
(73) Proprietor: SODICK CO., LTD., Yokohama Kanagawa 222 (JP)
(72) Inventor: Hori, Hidehito, Midori-ku, Yokohama 227 (JP)
(74) Representative: Kensett, John Hinton

(56) References cited:
- EP-A- 0 186 793
- EP-A- 0 347 716
- EP-A- 0 410 493
- DE-A- 3 824 006
- PATENT ABSTRACTS OF JAPAN vol. 014, no. 212 (M-0969)2 May 1990 & JP-A-02 048 113 (SODICK CO LTD.) 16 February 1990

## Description

The present invention relates to a wire-cut electroerosion apparatus. More specifically, the present invention relates to a wire-cut electrical discharge machining ("EDM") apparatus for machining a workpiece submerged in a working tank that is filled with a dielectric fluid.

It is known that there are two different types of EDM apparatus for machining a workpiece in a working tank by electrical discharges, that is, a die sinking EDM apparatus and a wire-cut EDM apparatus.

In a die sinking EDM apparatus for forming a cavity of a desired configuration in the workpiece, dielectric fluid is put into a working tank to submerge the workpiece fixed on a work table in the working tank. In a machining operation, a tool electrode having a three-dimensional figure advances toward the workpiece from above, along the Z axis. A door is generally provided on the front wall of the working tank to access the workpiece and the tool electrode. However, the walls tend to impair accessibility. Further, too much space is required to open and close the front door horizontally. If an automatic pallet changer is used to carry out unmanned machine operation for several days, the tank wall is susceptible to obstacle to change the workpiece.

U.S. Patent No. 4,712,288 to Lodetti et al. and Japanese Laid-Open Patent Publication No. 61-270023 disclose a die sinking EDM apparatus having a working tank of which a rear wall is fixed and the other three walls are a U-shaped unitary construction which can move vertically to obtain free access to the work table.

Japanese Laid-Open Patent Publication No. 2-48113 discloses a die sinking EDM apparatus in which the working tank consists of a base container member and at least one movable frame member which can move vertically. The movable frame members moves down into the base container member so that the four walls of the working tank can telescope as a whole in a sealing relationship.

In a wire-cut EDM apparatus, the workpiece is fixed on a work stand in the working tank movable in a horizontal plane, a lower arm extends into the working tank through an opening of one of the walls thereof and an upper arm is positioned above the lower arm. An electrode wire travels between an upper wire guide block and a lower wire guide block which are mounted on ends of the upper arm and the lower arm, respectively. The electrical discharges occur between the travelling wire and the workpiece through the dielectric fluid controlling the movement of the working tank along the X and Y axis. Since in the wire-cut EDM apparatus, a water or a water solution is used as a dielectric fluid, so-called "submerged machining" in which the workpiece is submerged in the dielectric fluid during machining, for preventing rust, is generally desirable.

Like in a die sinking EDM, the tank walls of a wire-cut EDM apparatus impair accessibility when loading the workpiece onto the work stand and vertically aligning the electrode wire for preparation of machining.

Japanese Laid-Open Patent Publication No. 2-298435 discloses a wire-cut EDM apparatus in which three tank walls of the front and both sides include a bellow to move vertically by expanding and contracting the bellow. However, this apparatus originally does not allow the submerged machining. When filling the working tank with a dielectric fluid, the tank walls of a bellow will expand with unsteady construction.

EP-A 0342716 also includes a bellow as a tank wall which expands or contracts vertically. Similar problems may apply to this as to JP 298435.

EP-A 0410493 discloses an apparatus in which a frame member of a working tank is movable by a lifting device. However, the lifting device is a complex arrangement which takes up a significant amount of space under the tank.

An object of the present invention is to provide a wire-cut electroerosion apparatus which allows easy access to the workpiece and the electrode wire.

It is another object of the invention to provide a wire-cut electroerosion apparatus with improved machining efficiency.

It is further an object of the invention to provide a wire-cut electroerosion apparatus in which walls of a working tank can move vertically with high precision in a sealing relationship.

It is an object of the invention to provide a wire-cut electroerosion apparatus in which walls of a working tank can move vertically without the need to provide an additional space and mechanism for housing the lowered walls.

It is further an object of the invention to provide a wire-cut electroerosion apparatus in which walls of a working tank can move vertically as required, notwithstanding the relative position of the working tank.

Additional objects and advantages and novel features of the invention will be set forth in part in the description which follows, and in part will become apparent to those skilled in the art upon examination of the following or may be learned by practice of the invention. The objects and advantages of the invention may be realized and attained by means of the instrumentalities and combinations particularly pointed out in the appended claims.

According to the present invention there is provided a wire-cut electroerosion apparatus for machining a workpiece supported at a vertical location in a working zone thereof, comprising an electrode wire tensioned between upper and lower guide members, an arm supported at one end thereof outside of said working tank said lower guide member being disposed on the other end of said arm and a generally four-sided working tank for containing a dielectric fluid, said working tank comprising;
a base container member forming at least a rear wall at the rear side thereof and having an opening through which said arm extends and a low wall forming at least a part of a front and a part of at least one side thereof, said low wall being sufficiently low in height to create an open space to provide access to said workpiece from the front and said at least one side thereof when said workpiece is supported in said vertical location in the working zone of said apparatus; and
at least one movable frame member vertically movable and stowable with respect to said base container member to cover said open space, said apparatus being characterized by:
a pair of pantographs, each pantograph having a link pin about which it expands and contracts for raising and lowering said at least one movable frame member with respect to said base container member;
a frame vertically supported on said tank;
a screw vertically supported on said frame;
a housing member connected to said link pin and positioned to spirally engage said screw within said frame; and
a screw driving device for rotatably driving said screw whereby said housing member is raised and lowered by means of rotation of said screw.

Preferably, the pantograph driving means comprises a frame, a ball screw rotatably and vertically supported by the frame and a housing member spirally engaging with the ball screw and engaging with the link pin, so that the housing member can move vertically as the actuating device drives the ball screw.

Preferably, the housing member is guided by the frame through a plurality of guide rollers to thereby maintain the pantograph upright against a bias load applied thereto.

The base container member advantageously includes a guide rail for guiding the movable frame member.

Further, the movable frame member may include a locking bent part for locking the movable frame member to the base container member through the guide rail against the fluid pressure in the tank.

Embodiments of the present invention will now be described by way of example only, with reference to the following drawings, in which;
Fig. 1 is an exploded perspective view showing the working tank and the lifting device of the present invention;
Fig. 2 is a perspective view showing the whole of the wire-cut electroerosion apparatus of the present invention;
Fig. 3 is a horizontal sectional view of the working tank for the wire-cut electroerosion apparatus of the present invention;
Fig. 4 is a cross-sectional front view of the working tank for the wire-cut electroerosion apparatus of the present invention;
Fig. 5 is a cross-sectional side view of the working tank for the wire-cut electroerosion apparatus of the present invention;
Fig. 6 is a cross-sectional front view of a pantograph driving means of the present invention; and
Fig. 7 is a cross-sectional side view of a pantograph driving means of the present invention;
Fig. 8 is a cross-sectional view showing a locking member in another embodiment.

Embodiments of the present invention are described hereinafter with reference to the drawings. An aspect of this invention is a construction for lifting a working tank, however, for easier understanding, the wire-cut electroerosion apparatus of the present invention in whole is described first.

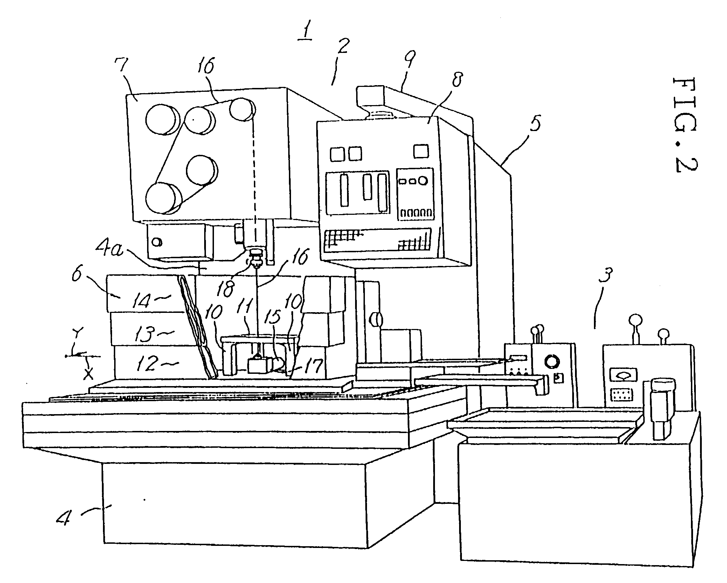

Fig. 2 shows the whole of a wire-cut electroerosion apparatus of the present invention. The wire-cut electroerosion apparatus 1 consists of a machine body 2, a dielectric fluid supply device 3 and a power generator 5. The machine body 2 includes a bed 4 placed forward and a column 4a. A cross table (not illustrated) is provided on the bed 4. A working tank 6 is overlaid on the cross table movably in a horizontal plane including orthogonal X and Y axes. A wire feeding device 7 is secured on an upper part of the column 4a and projects forward. An operation panel 8 is suspended forward by a pivotal pendant arm 9 from the crest of the power generator 5. A plurality of work stands 10 are provided in the working tank 6. A workpiece 11 to be machined is fixed on an upper surface of the work stands 10.

The working tank 6 consists of a base container member 12, a first movable frame member 13 and a second movable frame member 14. The base container member 12 includes a rear wall having an opening therein and a lower arm 15 passes therethrough. The base container member 12 also includes a low wall on three other sides which is lower than the rear wall and is preferably lower than a top surface of the work stands 10 to open out forward and toward both sides. The first and second movable frame members 13 and 14 are slidable to close the opening space of the base container member 12.

The lower arm 15 is fixedly supported at one end by the column 4a and a lower wire guide block 17 for guiding an electrode wire 16 is mounted on the other end of the lower arm 15 inside the working tank 6. An upper wire guide block 18 for guiding the electrode wire 16 is mounted on an upper arm (unnumbered) below the wire feeding device 7.

In preparing for machining, the workpiece 11 is fixed on the work stands 11 in the working tank 6. The movable frame members 13 and 14 are lifted up to close the opening space of the base container member 12. The working tank 6 is then filled with a dielectric fluid to submerge the workpiece 11 therein, and the electrode wire 16 is strained between the upper and lower wire guide blocks 18 and 17 through an initial hole pre-pierced in the workpiece 11.

Next, an electrode wire 16 is continuously fed from the wire feeding device 7 and electrical discharges occur in the machining gap formed between the travelling wire and the workpiece 11 in the dielectric fluid. The workpiece 11 is machined by the electric discharges and then shaped into the desired configuration by moving the cross table in the X- and/or Y- axis directions along the machining path.

The dielectric fluid supply device 3 is a storage tank and serves to maintain a resistivity of the fluid and to remove machined chips from the machining gap.

The construction of the working tank 6 and a lifting device for lifting up the movable frame members 13 and 14 will now be described.

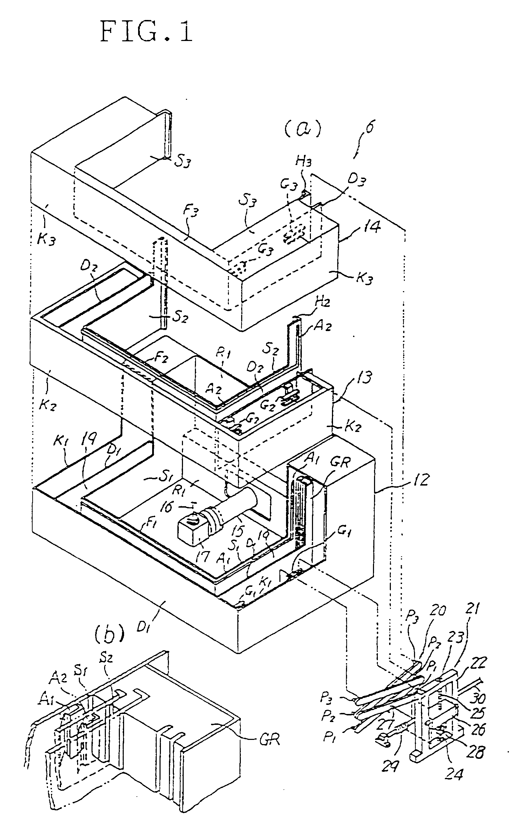

Fig. 1 (a) shows a part of the working tank 6 and the lifting device. Fig. 1 (b) shows enlargedly a guide rail section.

The base container member 12 includes a tall rear wall R1, a front wall F1, and walls of both sides S1. The front wall F1 and most of both side walls S1 are lower than the top surface of the work stands 10 to thereby open out forward and toward both sides. A partition wall D1 is provided on the outside of the front wall F1 and both side walls S1 to form a U-grooved drainage gutter 19. Further, covers K1 are provided on the outside of both sides of the partition wall D1 and the covers K1 and the partition wall D1 are spaced from each other.

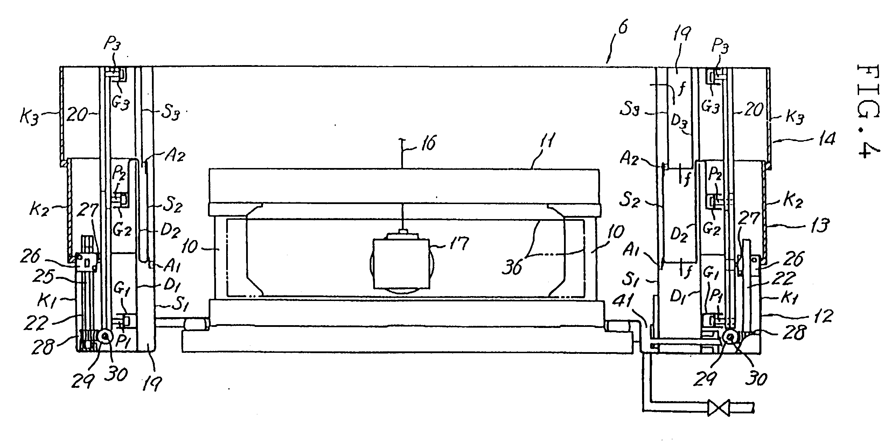

The first movable frame member 13 is formed in a U-shape to partly cover the unclosed space of the base container member 12. This first movable frame member 13 comprises an inner wall consisting of a front wall F2, both side walls S2 and locking bent parts H2. The first movable frame member 13 further comprises a partition wall D2 for enclosing the inner wall in spaced relation, and a cover K2 for enclosing the partition wall D2 in spaced relation. As best shown in Fig. 4, for the inner walls F2 and S2 and the partition wall D2, their bases are interconnected here and there to form a narrow U-shaped groove. This U-shaped groove can telescopically enter into between the inner walls F1 and S1 and the partition wall D1 to form a part of the U-grooved drainage gutter 19 of the base container member 12. In addition, the cover K2 covers over the outsides of the covers K1 of the base container member 12.

The second movable frame member 14 has almost the same construction with the first movable frame member 13 and is formed in a U-shape to cover the unclosed space of the base container member, as a whole. This second movable frame member 14 comprises an inner wall consisting of a front wall F3, both side walls S3 and locking bent parts H3. A partition wall D3 is provided on the outside of one of the walls S3. A cover K3 is provided on the outside of the front wall F3, the other of walls S3 and the partition wall D3 in spaced relation. For one of walls S3 and the partition wall D3, their bases are interconnected to form a narrow U-shaped groove. This U-shaped groove can telescopically enter into between the side wall S2 and the partition wall D2 to form an upper part of the U-grooved drainage gutter 19. The cover K3 covers over the upper part and the outside of the cover K2 of the first movable frame member 13 when it is lowered.

The base container member 12, the first movable frame member 13 and the second movable frame member 14 form the working tank 6 of which all sides are enclosed by tall walls by sliding up the movable frame members 13 and 14. The base container member 12, the first frame member 13 and the second movable frame member 14 can be telescopically overlaid by sliding down the movable frame member 13 and 14 thereby to form the working tank of which walls on the three sides are lowered.

A seal member A1 is attached on to the outside surface of the inner walls S1 and F1 of the base container member 12 while a seal member A2 is attached onto the outside surface of the inner walls S2 and F2 of the first movable frame member 13. These seal members A1 and A2 are provided to prevent leakage of dielectric fluid in the working tank when sliding up and down the movable frame members 13 and 14. A guide rail GR runs along the drainage gutter 19 to form almost U-shaped horizontal cross section and further extends vertically on both ends of the drainage gutter 19 to guide ends of walls S2 and S3 and to maintain the sealing performance of the seal members A1 and A2. In addition, the guide rail GR guides the locking bent members H2 and H3 provided on ends of both side walls S2 and S3, respectively. The locking bent members H2 and H3 prevent the movable frame members 13 and 14 from moving forward due to the fluid pressure so that the fluid may not leak out of the clearances between the front walls.

In addition, in the event of leakage of the working fluid, the fluid accumulated in the gutter 19 will be discharged through the outlet (not illustrated) disposed in a part of the gutter 19.

Pin guides G1, G2 and G3 are provided on the outside surface of the partition walls D1, D2 and D3, respectively. Slide pins P1, P2 and P3 secured to a pantagraph 20 are slidably fitted to the pin guides G1, G2 and G3, respectively. That is, the pantographs 20 are attached to both sides of the working tank 6 through the slide pins P1, P2 and P3.

A pantograph driving means 21 is provided on the outside of the pantograph 20. The pantograph driving means 21 includes a frame 22 supported on the base of the base container member 12, a ball screw 25 supported by the frame 22 through bearings 23 and 24 and a housing member 26 spirally engaging with the ball screw 25. The housing member 26 is connected to a cross portion of the pantograph 20 through a link pin 27. The housing member 26 houses a ball screw nut to move vertically as the ball screw 25 rotates.

In this embodiment, a worm wheel 28 is fittingly secured to a lower part of the ball screw 25. A driving shaft 30 is provided in the vicinity of the frame 22. A worm 29 engaging with the worm wheel 28 is fixed on the driving shaft 30. Then, the ball screw is rotatively driven by turning the driving shaft 30 through the worm wheel 28 and worm 29.

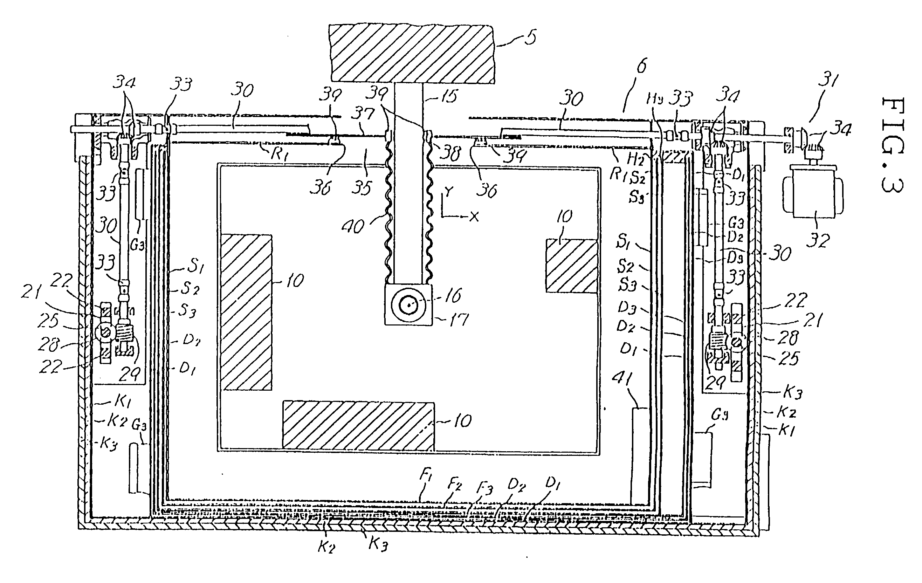

Fig. 3 shows a horizontal cross section of the working tank 6 and a power transmission mechanism for actuating the pantograph driving means 21. As shown in Fig. 3, the pantograph driving means 21 are disposed on both sides of the working tank 6. A driving motor 32 is provided in the vicinity of the working tank 6 to serve as a driving power source of a lifting device 31 for lifting and lowering the movable frame members 13 and 14. Moreover, multiple driving shafts 30 are linked with the driving motor 32 through universal joints 33 and bevel gears 34 operably to transmit the power, surrounding both sides and the rear of the working tank 6.

Therefore, ball screws 25 of both pantograph driving means 21 are rotatively driven through the driving shafts 30, worms 29 and worm wheels 28 by running the drive motor 32.

The construction of an arm passage portion 35 for the lower arm 15 is best shown in Fig. 3. A horizontally extended opening 36 is formed in the rear wall R1 of the base container member 12. A sliding plate 37 covers the opening 36 from the outside and is slidable in the X- axis direction with respect to the working tank 6. The sliding plate 37 has a through hole 38 at or about its centre for the passage of the lower arm 15. Seal members 39 are provided between the opening 36 and the sliding plate 37 and between the sliding plate 37 and the lower arm 15. Due to this construction, the working tank 6 and the lower arm 15 can move relatively in the X- and Y- axis directions, maintaining sealing relationship.

Additionally, the drainage pit 41 is provided in the working tank 6 for discharging the dielectric fluid.

As best shown in Fig. 4, the base container member 12 and the movable frame members 13 and 14 can be telescopically overlaid on each other. The drainage gutter 19 formed between side walls S1, S2 and S3 and the partition walls D1, D2 and D3 collect the fluid rising above the predetermined fluid level as shown by the arrow f.

The pantograph 20 and the pantograph driving means 21 are provided on the inside of the covers K1, K2 and K3.

The pin guides G1, G2 and G3 attached onto the outside surfaces of the partition walls D1, D2 and D3 are slidably engaged with the respective slide pins P1, P2 and P3 secured to the pantagraph 20.

The pantograph 20 is connected to the housing member 26 of the pantograph driving means 21 through the link pin 27 on the opposite side of the slide pins P1, P2 and P3.

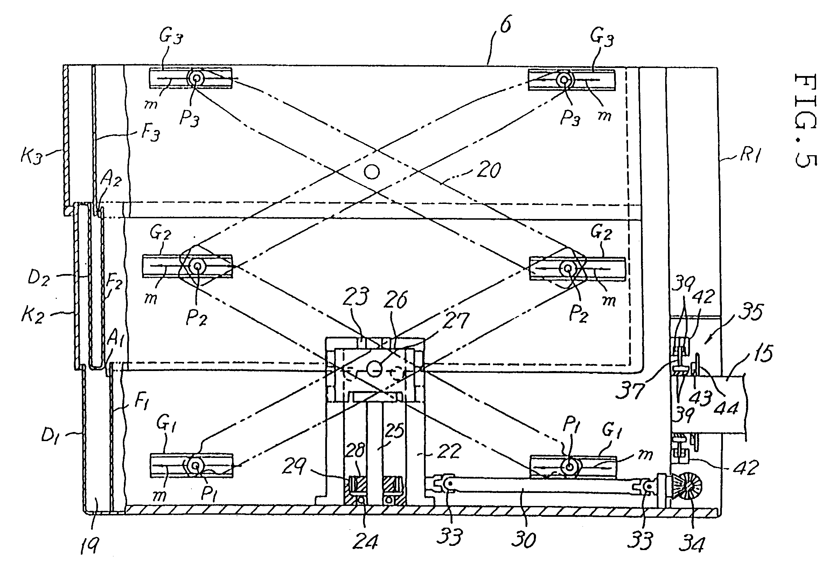

Fig. 5 is a cross-sectional side view of the working tank 6.

As best shown in Fig. 5, the pin guides G1, G2 and G3 are provided forward and backward on the base container member 12, the movable frame members 13 and 14, respectively. The slide pins P1, P2 and P3 are secured to the ends and joint portions of the pantograph 20 and can move in respective pin guides G1, G2 and G3, as shown by the arrow m.

The link pin 27 is rollably secured to the housing member 26 and is engaged with the cross portion of the pantograph 20.

As the housing member 26 moves vertically through the rotation of the ball screw 25, the pantograph 20 vertically expands and contracts. Therefore, the movable frame members 13 and 14 can slide up and down in horizontally supported relation due to the action of the pin guides G1, G2 and G3 and the slide pins P1, P2 and P3.

As shown in Fig. 5, the sliding plate 37 in the arm passage portion are guided by plate holding members 42. A dam 43 and a dam supporter 44 are provided on the outside of the sliding plate 37 to prevent the entrance of the unwanted substance.

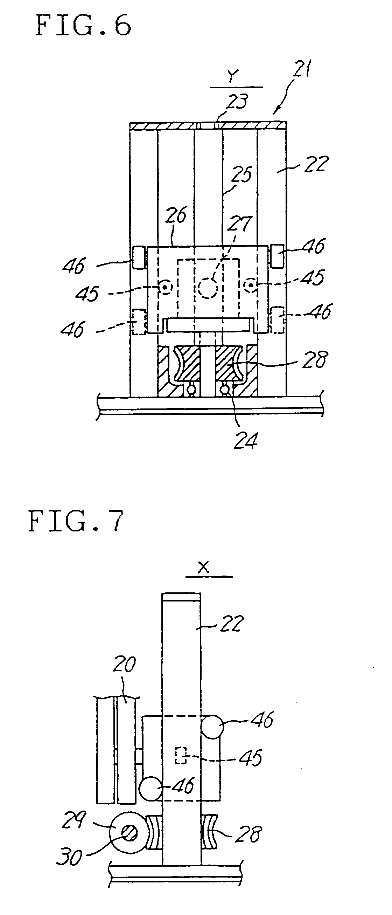

Next, the construction of the pantograph driving means 21 will be described in detail with reference to Fig. 6 and 7.

The pantograph driving means 21 includes the frame 22 fixed on the working tank 6. The ball screw 25 is uprightly and rotatably supported by the frame 22 through the bearings 23 and 24. A worm wheel 28 is secured to a lower part of the ball screw 25. The housing member 26 housing a ball screw nut spirally engages the ball screw 25 above the worm wheel 28. The housing member 26 includes Y-direction guide rollers 45 and X-direction guide rollers 46 for maintaining the pantograph 20 upright against a bias load from the dead weight since the movable frame members 13 and 14 are U-shaped.

The Y-direction guide rollers 45 consist of a pair of rollers which are rollingly contacted to the inner surfaces of the frame 22. The pair of rollers are level with the link pin 27 so that the pantograph 20 may be maintained upright against its fall in the Y-direction.

As best shown in Fig. 7, the X-direction guide rollers 46 consist of two pairs of rollers. One pair of rollers are level and are rollingly contacted to the surface of the frame 22 facing the pantograph 20. The other pair of rollers, level with each other, oppose one pair of rollers with respect to the frame and are rollingly contacted to the surface of the frame 22 facing the cover K1. The levels of these two pairs of rollers are vertically offset. The centre of the housing member 26 connected to the link pin 27 experiences moments imposed through the link pin 27 by the tank weight loaded to the pin guide G2 and G3. The X-direction guide rollers 46 resist the moments to thereby maintain the pantograph upright against its fall in the X-direction. In addition, the housing member is stably guided by the frame 22 through the guide rollers 45 and 46 so that an excessive radial load may not be imposed between the ball screw 25 and the ball screw nut.

Based on the above construction, the operation of the wire-cut electroerosion apparatus 1 of this embodiment will now be described.

As described above, for the base container member 12 of the working tank 6, the front wall F1 and most of both side walls S1 are lower than the top surface of the work stands 10 for fixing the workpiece 11 to thereby open out forward and toward both sides. A tall rear wall R1 including the opening 36 for the passage of the lower arm 15 can move relatively to the lower arm 15. The first and second movable frame members 13 and 14 are formed in a U-shape. The movable frame members can slide up to cover the unclosed space of the base container member 12 and can slide down to telescopically overlay upon the low walls F1 and S1 of the base container member 12.

Thus, the movable frame members 13 and 14 will not interfere with the lower arm 15 when they are lowered. As soon as the dielectric fluid is discharged after machining, the movable frame members 13 and 14 are lowered so that the front and both side walls of the tank 6 can be lowered below the workpiece 11. Therefore, forward and both sides access to the workpiece is enabled. After an operator changes the workpiece 11 and fixes it on the work stand 10, the dielectric fluid can be filled at the same time of lifting the movable frame members 13 and 14 to restart machining immediately. Machining efficiency is improved.

As will be apparent from this embodiment, multiple sets of the pantograph 20 and the pantograph driving means 21 are provided and these sets are synchronized by a single drive motor 32. Also, the multiple movable frame members 13 and 14 can be supported at a plurality of fulcra and can move vertically simultaneously in horizontally supported relation.

Moreover, in this embodiment, the housing member 26 of the pantograph driving means 21 is guided by the frame 22 through the Y-direction guide rollers 45 and the X-direction guide rollers 46.

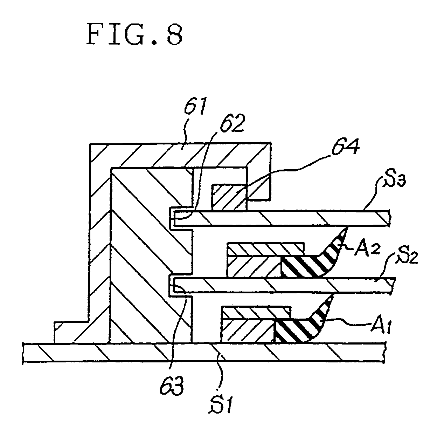

The locking bent member and the guide rail for guiding the locking bent member is not limited to the embodiment shown in Fig. 1. As shown in Fig. 8, a locking member 61 having a bent portion at its end may be fixedly provided on side wall S1 of the base container member 12. A guiding member having guiding grooves 62 and 63 is fitted inside the locking member 61. The side wall S2 and S3 of the movable frame members 13 and 14 are guided by the guiding grooves 63 and 62, respectively. A stopper 64 is fixed on the outer surface of the side wall S3 so as to engage with the bent portion of the locking member 61. Seal members A1 and A2 are provided among side walls S1, S2 and S3. In this arrangement, the movable frame members 13 and 14 are prevented from moving forward due to the fluid pressure.

The foregoing description of preferred embodiments of the invention have been presented for purposes of illustration and description. It is not intended to be exhaustive or to limit the invention to the precise form disclosed, and obviously many modifications and variations are possible in the light of the above teaching. For example, the workpiece may be replaced automatically or semi-automatically by associating a conventional NC controller, the dielectric fluid supply device and the lifting device. After machining, the movable frame members may be automatically lowered at the same time as discharging of the dielectric fluid. The workpiece may be replaced manually or by an automatic pallet changer. After detecting the end of the workpiece change using a sensor, the dielectric fluid may be supplied into the working tank at the same time as automatically lifting the movable frame members. Machining can then restart.

## Claims

1. A wire-cut electroerosion apparatus for machining a workpiece (11) supported at a vertical location in a working zone thereof, comprising an electrode wire (16) tensioned between upper and lower guide members (18,17), an arm (15) supported at one end thereof outside of said working tank said lower guide member (17) being disposed on the other end of said arm and a generally four-sided working tank (6) for containing a dielectric fluid, said working tank comprising;
a base container member (12) forming at least a rear wall (R1) at the rear side thereof and having an opening (36) through which said arm extends and a low wall forming at least a part of a front and a part of at least one side thereof, said low wall being sufficiently low in height to create an open space to provide access to said workpiece from the front and said at least one side thereof when said workpiece is supported in said vertical location in the working zone of said apparatus; and
at least one movable frame member (13,14) vertically movable and stowable with respect to said base container member to cover said open space, said apparatus being characterized by:
a pair of pantographs (20), each pantograph having a link pin (27) about which it expands and contracts for raising and lowering said at least one movable frame member with respect to said base container member;
a frame (22) vertically supported on said tank;
a screw (25) vertically supported on said frame;
a housing member (26) connected to said link pin and positioned to spirally engage said screw within said frame; and
a screw driving device for rotatably driving said screw whereby said housing member is raised and lowered by means of rotation of said screw.

2. A wire-cut electroerosion apparatus as claimed in Claim 1, wherein said housing member includes a plurality of rollers (45,46) which rollingly contact the surface of said frame to guide vertical movement of said housing member within said frame, whereby said screw is supported against a load applied thereto.

3. A wire-cut electroerosion apparatus as claimed in Claim 2, wherein said plurality of rollers include a pair of rollers (45) which rollingly contact the inner surfaces of said frame.

4. A wire-cut electroerosion apparatus as claimed in Claim 2, wherein said plurality of rollers include two pairs of rollers (46) each of which are positioned at a different level on said housing member oppositely to each other with respect to said frame.

5. A wire-cut electroerosion apparatus as claimed in Claim 2, wherein said at least one movable frame member includes a rigid inner wall (F2,S2) and a rigid outer wall (D2) and further comprising a passage (19) within said base container member operable to register and interconnect with a passage disposed between said inner and outer walls, whereby when said at least one movable frame member is in its raised position said passages are operable to drain any excess fluid in said working tank.

6. A wire-cut electroerosion apparatus as claimed in Claim 2, wherein said base container member includes a guide rail (GR) for vertically guiding said at least one movable frame member and wherein said movable frame member includes a locking part for locking said movable frame member to said base container member through said guide rail by means of a fluid pressure in said working tank.

## Patentansprüche

1. Drahtschneide-Elektroerosionsvorrichtung zum Bearbeiten eines Werkstücks (11), das an einer vertikalen Position in einer Arbeitszone derselben unterstützt ist, mit einem Elektrodendraht (16), der zwischen einem oberen und einem unteren Führungselement (18, 17) gespannt ist, einem Arm (15), der an einem seiner Enden außerhalb des Arbeitstanks unterstützt ist, wobei das untere Führungselement (17) am anderen Ende des Arms angeordnet ist, und einem im allgemeinen vierseitigen Arbeitstank (6), der ein dielektrisches Fluid enthält, wobei der Arbeitstank umfaßt:
ein Basisbehälterelement (12), das an seiner Rückseite wenigstens eine Rückwand (R1) mit einer Öffnung (36), durch die sich der Arm erstreckt, sowie eine untere Wand bildet, die ihrerseits wenigstens einen Teil einer vorderen Seite und einen Teil wenigstens einer Seite bildet, wobei die untere Wand eine ausreichend niedrige Höhe besitzt, um einen offenen Raum zu erzeugen, um einen Zugang zum Werkstück von vorn und von der wenigstens einen Seite zu schaffen, wenn das Werkstück an der vertikalen Position in der Arbeitszone der Vorrichtung unterstützt ist; und
wenigstens ein bewegliches Rahmenelement (13, 14), das vertikal beweglich und in bezug auf das Basisbehälterelement einziehbar ist, um den offenen Raum abzudecken, wobei die Vorrichtung gekennzeichnet ist durch:
ein Paar von Scherenhubvorrichtungen (20), wobei jede Scherenhubvorrichtung einen Verbindungsstift (27) besitzt, um den sie aus- und eingefahren wird, um das wenigstens eine bewegliche Rahmenelement in bezug auf das Basisbehälterelement anzuheben bzw. abzusenken;
einen Rahmen (22) der am Tank vertikal unterstützt ist;
eine Schraube (25), die am Rahmen vertikal unterstützt ist;
ein Gehäuseelement (26), das mit dem Verbindungsstift verbunden und so positioniert ist, daß es mit der Schraube im Rahmen in spiralförmigem Eingriff ist; und
eine Schraubenantriebsvorrichtung, die die Schraube in Drehrichtung antreibt, wobei das Gehäuseelement durch die Drehung der Schraube angehoben bzw. abgesenkt wird.

2. Drahtschneide-Elektroerosionsvorrichtung nach Anspruch 1, bei der das Gehäuseelement mehrere Rollen (45, 46) enthält, die mit der Oberfläche des Rahmens in Rollkontakt sind, um die vertikale Bewegung des Gehäuseelements im Rahmen zu führen, wobei die Schraube gegen eine auf sie ausgeübte Last unterstützt ist.

3. Drahtschneide-Elektroerosionsvorrichtung nach Anspruch 2, bei der die mehreren Rollen ein Paar von Rollen (45) enthalten, die mit den inneren Oberflächen des Rahmens in Rollkontakt sind.

4. Drahtschneide-Elektroerosionsvorrichtung nach Anspruch 2, bei der die mehreren Rollen zwei Paare von Rollen (46) enthalten, wobei die beiden Paare auf verschiedenen Höhen des Gehäuseelements und in bezug auf den Rahmen einander gegenüber angeordnet sind.

5. Drahtschneide-Elektroerosionsvorrichtung nach Anspruch 2, bei der das wenigstens eine bewegliche Rahmenelement eine starre Innenwand (F2, S2) sowie eine starre Außenwand (D2) enthält und ferner im Basisbehälterelement einen Durchlaß (19) aufweist, der so betätigt werden kann, daß er mit einem zwischen den inneren und äußeren Wänden angeordneten Durchlaß zur Deckung kommt und mit diesem verbunden werden kann, wobei dann, wenn sich das wenigstens eine bewegliche Rahmenelement in seiner angehobenen Position befindet, die Durchlässe so betätigt werden können, daß irgendwelches überschüssige Fluid im Arbeitstank durch sie abläuft.

6. Drahtschneide-Elektroerosionsvorrichtung nach Anspruch 2, bei der das Basisbehälterelement eine Führungsschiene (GR) für die vertikale Führung des wenigstens einen beweglichen Rahmenelements enthält und bei der das bewegliche Rahmenelement ein Verriegelungsteil enthält, mit dem das bewegliche Rahmenelement am Basisbehälterelement durch die Führungsschiene mittels eines Fluiddrucks im Arbeitstank verriegelt wird.

## Revendications

1. Machine d'électro-érosion à coupe par fil pour l'usinage d'une pièce (11) supportée à un endroit vertical dans une zone de travail de celle-ci, comprenant un fil électrode (16) tendu entre des éléments de guidage supérieur et inférieur (18, 17), un bras (15) supporté à une extrémité à l'extérieur de la zone de travail, l'élément de guidage inférieur (17) étant placé à l'autre extrémité de ce bras, et un bac de travail (6) de manière générale à quatre côtés destiné à contenir un fluide diélectrique, ce bac de travail comprenant :
un récipient de base (12) formant au moins une paroi arrière (R1) sur son côté arrière et ayant une ouverture (36) par laquelle passe le bras et une paroi basse formant au moins une partie de l'avant et une partie d'au moins un côté de celui-ci, cette paroi basse étant suffisamment basse pour créer un espace ouvert pour donner accès à la pièce de l'avant et dudit côté de celui-ci lorsque la pièce est supportée à l'endroit vertical dans la zone de travail de la machine, et
au moins un cadre mobile (13, 14) mobile verticalement et pouvant être rangé relativement au récipient de base pour couvrir l'espace ouvert,
cette machine étant caractérisée par :
une paire de pantographes (20), chaque pantographe ayant un axe d'articulation (27) autour duquel il se dilate et se contracte pour faire monter et descendre le ou les cadres mobiles relativement au récipient de base,
un cadre (22) monté verticalement sur le bac,
une vis (25) montée verticalement sur ce cadre,
un logement (26) lié à l'axe d'articulation et placé pour être en prise suivant une hélice avec la vis montée dans le cadre, et
un dispositif d'entraînement destiné à faire tourner la vis pour faire monter et descendre le logement.

2. Machine d'électro-érosion à coupe par fil selon la revendication 1, dans laquelle le logement comporte une série de galets (45, 46) qui sont en contact roulant avec la surface du cadre pour guider le mouvement vertical du logement dans le cadre, la vis étant ainsi supportée vis-à-vis d'une charge appliquée à elle.

3. Machine d'électro-érosion à coupe par fil selon la revendication 2, dans laquelle la série de galets comporte une paire de galets (45) qui sont en contact roulant avec les faces intérieures du cadre.

4. Machine d'électro-érosion à coupe par fil selon la revendication 2, dans laquelle la série de galets comporte deux paires de galets (46) placées à des niveaux différents sur le logement et à l'opposé l'une de l'autre relativement au cadre.

5. Machine d'électro-érosion à coupe par fil selon la revendication 2, dans laquelle le ou chaque cadre mobile comporte une paroi intérieure rigide (F2, S2) et une paroi extérieure rigide (D2), et comprenant en outre un passage (19) prévu dans le récipient de base qui peut être manoeuvré pour coïncider et communiquer avec un passage situé entre lesdites parois intérieure et extérieure, ces passages pouvant, lorsque le ou les cadres mobiles est ou sont en position haute, être manoeuvrés pour évacuer le fluide en excès contenu dans le bac de travail.

6. Machine d'électro-érosion à coupe par fil selon la revendication 2, dans laquelle le récipient de base comporte une glissière (GR) pour le guidage vertical du ou des cadres mobiles, et dans laquelle le ou chaque cadre mobile comporte une partie de verrouillage pour son verrouillage au récipient de base par l'intermédiaire de la glissière au moyen de la pression du fluide dans le bac de travail.
